# NEUE EUROPÄISCHE PATENTSCHRIFT

(11) **EP 3 038 868 B2**
(45) Veröffentlichungstag und Bekanntmachung des Hinweises auf die Entscheidung über den Einspruch: **26.08.2020**
(45) Hinweis auf die Patenterteilung: 16.08.2017
(21) Anmeldenummer: 13773200.4
(22) Anmeldetag: 26.09.2013
(51) Int. Cl.: B60T 8/17

(54) **VERFAHREN ZUM BREMSEN EINES SCHIENENFAHRZEUGS UND STEUER- UND/ODER REGELEINRICHTUNG FÜR EIN BREMSSYSTEM**
PROCEDURE FOR BRAKING A RAILWAY VEHICLE AND CONTROL SYSTEM FOR A BRAKING SYSTEM
PROCÉDÉ POUR FREINER UNE VÉHICULE DE CHÉMIN DE FER ET SYSTÈME DE COMMANDE ET/OU RÉGLAGE POUR UN SYSTÈME DE FREINAGE

(43) Veröffentlichungstag der Anmeldung: 06.07.2016
(73) Patentinhaber: Siemens Mobility GmbH, 81739 München (DE)
(72) Erfinder: JENNEK, Steffen, 82061 Neuried (DE); STOFF, Helmut, 83627 Warngau (DE)
(86) Internationale Anmeldenummer: PCT/EP2013/070077
(87) Internationale Veröffentlichungsnummer: WO 2015/043636

(56) Entgegenhaltungen:
- WO-A1-2005/021347
- DE-A1-102008 045 712
- DE-A1-102011 110 047
- DE-A1-102011 113 120
- DE-A1-102012 203 132
- DE-T2- 69 815 557
- US-A- 4 344 138

## Beschreibung

Die Erfindung betrifft ein Verfahren zum Bremsen eines Schienenfahrzeugs mittels eines eine Steuer- und/oder Regeleinrichtung aufweisenden Bremssystems, wobei die Steuer- und/oder Regeleinrichtung eine Gleitschutzkontrolleinheit zur Gewährleistung eines vorgegebenen Haftwertes zwischen den Rädern des Schienenfahrzeugs und der Schiene aufweist und wobei Bremsanforderungssignale unterschiedlichen Ursprungs von der Steuer- und/oder Regeleinrichtung berücksichtigt werden. Die Erfindung betrifft weiterhin eine Steuer- und/oder Regeleinrichtung für ein Bremssystem eines Schienenfahrzeugs, mit einer Gleitschutzkontrolleinheit zur Gewährleistung eines vorgegebenen Haftwertes zwischen den Rädern des Schienenfahrzeugs und der Schiene und mit Signaleingängen für mehrere Bremsanforderungssignale unterschiedlichen Ursprungs. Die Erfindung betrifft schließlich auch ein entsprechendes Bremssystem.

Die DE 10 2008 045 712 A1 beschreibt ein Verfahren zum Bremsen eines Schienenfahrzeugs mittels eines elektropneumatischen Bremssystems mit einem Gleitschutzrechner als Kontroller zur Gewährleistung eines vorgegebenen Haftwertes zwischen den Rädern des Schienenfahrzeugs und der Schiene, wobei Bremsanforderungssignale unterschiedlichen Ursprungs, nämlich durch Vorgabe des Steuerstandes und durch Notbremsanforderung seitens der zentralen Zugsteuerung, berücksichtigt werden.

Für Bremsen von Schienenfahrzeugen wird im Zuständigkeitsbereich des Internationalen Eisenbahnverbandes UIC (UIC: franz. "Union internationale des chemins de fer") im Allgemeinen eine sogenannte "gleitschutzfreie Bremsart" gefordert. D.h. es muss eine Möglichkeit zum Bremsen geben, ohne dass die Bremsung einer Regelung durch den Gleitschutz unterliegt.

Der Grund hierfür ist, dass prinzipbedingt der Gleitschutz mit seinen Gleitschutzventilen das letzte Glied in der Kette von der Bremsanforderung bis zu den Bremsaktuatoren bildet. Die Figur der eingangs erwähnten Druckschrift DE 10 2008 045 712 A1 zeigt dies recht deutlich.

Eine irrtümliche Absperrung der Gleitschutzventile durch die Gleitschutz-Regelung der Gleitschutzkontrolleinheit oder ein mechanischer Fehler an den Gleitschutzventilen könnte ein Anlegen der pneumatischen Bremse im Bedarfsfall verhindern.

Der im Zuständigkeitsbereich des Verbandes UIC eingesetzte pneumatische Gleitschutz des Bremssystems verfügt oftmals über eine Sicherheitsabschaltung, die nach einer gewissen Zeitspanne (max. 10 s) eine unzulässige Ansteuerung unterbindet. Innerhalb dieser Zeitspanne kann ein Fehler im Gleitschutzsystem zum kompletten Versagen der pneumatischen Bremse führen. Mit dieser gleitschutzfreien Bremsart hat der Fahrzeugführer die Möglichkeit, vor Ablauf der Sicherheitszeit den Gleitschutz manuell zu deaktivieren.

Aufgabe der vorliegenden Erfindung ist es, ein Verfahren, eine Steuer- und/oder Regeleinrichtung sowie ein entsprechendes Bremssystem anzugeben, bei denen eine gleitschutzfreie Bremsart alternativ ausgelöst wird.

Die Lösung der Aufgabe erfolgt durch die Merkmale der unabhängigen Ansprüche. Vorteilhafte Ausgestaltungen sind in den Unteransprüchen angegeben.

Bei dem erfindungsgemäßen Verfahren ist vorgesehen, dass die Gleitschutzfunktion der Gleitschutzkontrolleinheit ausschließlich bei zeitgleichem Anliegen von mindestens zwei Bremsanforderungssignalen unterschiedlichen Ursprungs, deren Bremsanforderung über eine jeweilige vorgegebene Verzögerungsgrenze hinausgeht, zum gleitschutzfreien Bremsen deaktiviert wird. Jede einzelne Bremsanforderung mittels Bremsanforderungssignal für sich hat selbstverständlich das Einleiten einer entsprechenden Bremsung mittels des Bremssystems zur Folge. Diese Bremsungen sind dann Bremsungen, bei denen die Gleitschutzkontrolleinheit einen bestimmten Haftwert zwischen den Rädern des Schienenfahrzeugs und der Schiene gewährleistet.

Das erfindungsgemäße Verfahren hat den Vorteil, dass das gleitschutzfreie Bremsen nicht von einer singulären Bedienhandlung (zum Beispiel ein Betätigen des Notschlagtasters) hervorgerufen werden kann, was oftmals nicht erwünscht ist.

Mit Vorteil steuert die Gleitschutzkontrolleinheit die Gleitschutzventile des Bremssystems an, wobei die Gleitschutzventile auf ihnen nachgeschaltete Bremszylinder des Bremssystems wirken.

Das Bremssystem ist vorzugsweise ein pneumatisches Bremssystem. Das Bremsen ist dementsprechend ein pneumatisches Bremsen und der Gleitschutz ist ein pneumatischer Gleitschutz. Das Bremssystem kann alternativ jedoch auch ein elektrohydraulisches Bremssystem, ein hydraulisches Bremssystem, ein elektromechanisches Bremssystem, ein elektrodynamisches Bremssystem (Rekuperations-Bremssystem), etc. mit entsprechenden Bremsaktoren sein.

Gemäß der Erfindung wird die Gleitschutzfunktion der Gleitschutzkontrolleinheit ausschließlich bei dem zeitgleichen Anliegen von mindestens zwei Bremsanforderungssignalen, deren Bremsanforderung über eine jeweilige vorgegebene Verzögerungsgrenze hinausgeht, deaktiviert. Bei dieser Ausführungsform ist also keine alternative Möglichkeit zur Deaktivierung der Gleitschutzfunktion, oder anders ausgedrückt zur Aktivierung der gleitschutzfreien Bremsart, vorhanden.

Insbesondere ist vorgesehen, dass die Gleitschutzkontrolleinheit bei zeitgleichem Anliegen von mindestens zwei Bremsanforderungssignalen mit jeweils maximaler Bremsanforderung deaktiviert wird. Dabei ist auch die Anforderung einer Notbremsung als maximale Bremsanforderung aufzufassen.

Gemäß einer weiteren bevorzugten Ausführungsform der Erfindung ist vorgesehen, dass das Bremssystem mehrere Bremsanforderungs-Teilsysteme zur Bremsanforderung aufweist, wobei zumindest zwei der gleichzeitig anliegenden Bremsanforderungssignale ihren Ursprung in unterschiedlichen Bremsanforderungs-Teilsystemen des Bremssystems haben.

Gemäß noch einer weiteren bevorzugten Ausführungsform der Erfindung ist vorgesehen, dass die mindestens zwei Bremsanforderungssignale jeweils über zwei voneinander unabhängige Signalpfade zu der Steuer- und/oder Regeleinrichtung übertragen werden. Dabei ist insbesondere vorgesehen, dass die über die einen Signalpfade übertragenen Bremsanforderungssignale unabhängig von den über die jeweils anderen Signalpfade übertragenen Bremsanforderungssignale zum Deaktivieren der Gleitschutzfunktion der Gleitschutzkontrolleinheit genutzt werden.

Bei zwei Bremsanforderungssignalen unterschiedlichen Ursprungs, die jeweils über zwei Signalpfade übertragen werden, ergeben sich also vier Signalpfade, deren Signale je paarweise verarbeitet werden. Als Resultat der beiden Bremsanforderungssignale auf jedem dieser beiden Signalpfadpaare kann es dabei zu einem Deaktivieren der Gleitschutzfunktion der Gleitschutzkontrolleinheit kommen. Die beiden voneinander unabhängigen Signalpfadpaare ermöglichen weiterhin eine Prüfung auf Störungen im Bremssystem, insbesondere der Kontrolle der Funktion der Signalpfade.

In einer weiteren Ausführungsform der Erfindung werden daher die über die unterschiedlichen Signalpfade übertragenen Bremsanforderungssignale zur Prüfung auf Störungen im Bremssystem genutzt.

Die Erfindung betrifft weiterhin eine Steuer- und/oder Regel-einrichtung für ein Bremssystem eines Schienenfahrzeugs, mit einer Gleitschutzkontrolleinheit zur Gewährleistung eines vorgegebenen Haftwertes zwischen den Rädern des Schienenfahrzeugs und der Schiene und mit Signaleingängen für mehrere Bremsanforderungssignale unterschiedlichen Ursprungs. Es ist vorgesehen, dass die Gleitschutzfunktion der Gleitschutzkont-rolleinheit deaktivierbar ist, wobei die Steuer- und/oder Re-geleinrichtung derart eingerichtet ist, dass die Gleitschutzfunktion der Gleitschutzkontrolleinheit ausschließlich bei zeitgleichem Anliegen von mindestens zwei Bremsanforderungssignalen unterschiedlichen Ursprungs an den Signaleingängen, deren Bremsanforderung über eine jeweilige vorgegebene Verzögerungsgrenze hinausgeht, deaktiviert wird. Die Steuer- und/oder Regeleinrichtung ist insbesondere zur Durchführung des vorstehend genannten Verfahrens eingerichtet.

Gemäß einer bevorzugten Ausgestaltung der Erfindung ist diese Gleitschutzkontrolleinheit als Gleitschutzkontrolleinheit zur Ansteuerung von Gleitschutzventilen des Bremssystems ausgebildet, die an die Steuer- und/oder Regeleinrichtung angeschlossen sind. Die Gleitschutzventile wirken ihrerseits auf ihnen nachgeschaltete Bremszylinder des Bremssystems.

Die Erfindung betrifft schließlich auch noch ein Bremssystem zum Bremsen eines Schienenfahrzeuges, mit einer vorstehend genannten Steuer- und/oder Regeleinrichtung. Dieses Bremssystem ist -wie bereits erwähnt- vorzugsweise ein pneumatisches Bremssystem.

Mit Vorteil weist das Bremssystem mehrere Bremsanforderungs-Teilsysteme auf, wobei zumindest zwei der gleichzeitig anliegenden Bremsanforderungssignale ihren Ursprung in unterschiedlichen Bremsanforderungs-Teilsystemen des Bremssystems haben.

Nachfolgend wird ein Ausführungsbeispiel der Erfindung anhand von Zeichnungen näher erläutert. Darin zeigt die
- Fig. 1: eine Illustration des Steuerungs- und/oder Regelungsverfahrens eines Bremssystems und
- Fig. 2: ein Bremssystem mit einer Steuer- und/oder Regeleinrichtung gemäß einer bevorzugten Ausführungsform der Erfindung.

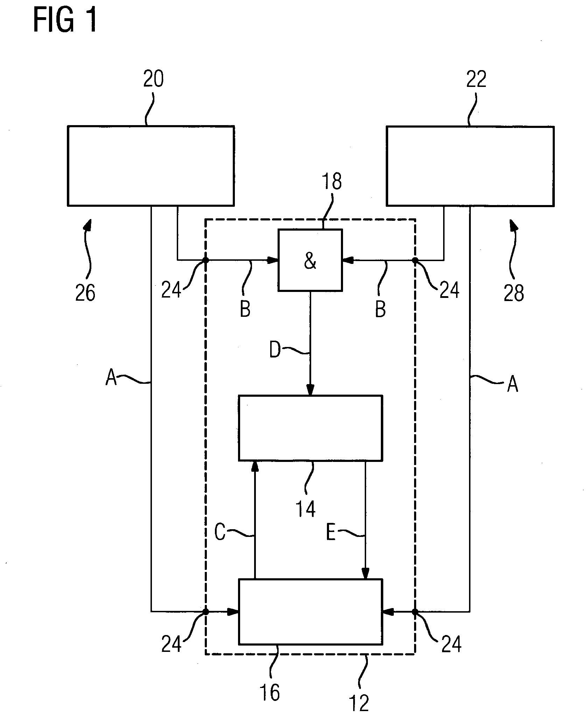

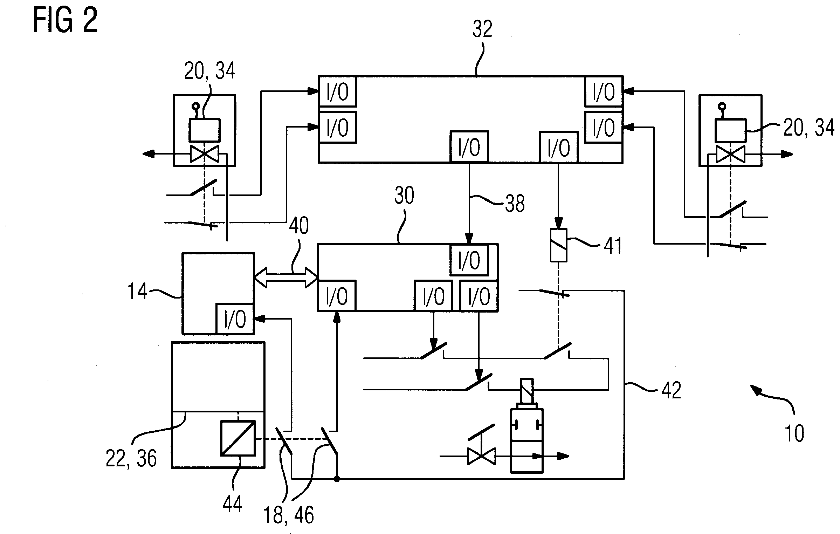

Die Fig. 1 zeigt eine schematische Darstellung zur Illustration der Realisierung eines gleitschutzfreien Betriebs eines in Fig. 2 konkret gezeigten Bremssystems 10 eines Schienenfahrzeugs. Wesentliche Komponente dieses Bremssystems 10 ist eine Steuer- und/oder Regeleinrichtung 12. Diese Steuer- und/oder Regeleinrichtung 12 umfasst eine Gleitschutzkontrolleinheit 14 zur Gewährleistung eines vorgegebenen Haftwertes zwischen den Rädern des Schienenfahrzeugs und der Schiene sowie eine Steuerkomponente 16 zur Ansteuerung der Gleitschutzkontrolleinheit 14. Diese Steuerkomponente 16 sorgt bei allen Arten von Bremsanforderungen für das aktivieren/Deaktivieren der Gleitschutzkontrolleinheit 14. Weiterhin zeigt Fig. 1 eine weitere Komponente 18 der Steuer- und/oder Regeleinrichtung 12, die zumindest für ein Deaktivieren der Gleitschutzkontrolleinheit 14 sorgen kann.

Des Weiteren sind in Fig. 1 ein Ursprung 20 eines ersten Bremsanforderungssignals und ein Ursprung 22 eines weiteren (also eines zweiten) Bremsanforderungssignals gezeigt. Beide Ursprünge 20, 22 liegen im Bremssystem 10, sind jedoch kein Teil der Steuer- und/oder Regeleinrichtung 12. Die Ursprünge 20, 22 der Bremsanforderungen sind zum einen über erste Signalpfade A mit der Steuerkomponente 16 und zum anderen über zweite Signalpfade B mit der weiteren Komponente 18 verbunden. Über diese Signalpfade A, B und auf den Signalpfaden liegenden Signaleingänge 24 der Steuer-und/oder Regeleinrichtung 12 werden die Bremsanforderungssignale an die Komponenten 16, 18 übertragen. Der Ursprung 20 der ersten Bremsanforderung liegt in einem ersten Bremsanforderungs-Teilsystem 26 des Bremssystems 10. Der Ursprung 22 der zweiten Bremsanforderung liegt in einem zweiten Bremsanforderungs-Teilsystem 28 des Bremssystems 10.

Die Steuerkomponente 16 und die weitere Komponente 18 sind dann ihrerseits mit der Gleitschutzkontrolleinheit 14 über interne Steuerpfade C, D signaltechnisch verbunden.

Zur Deaktivierung der Gleitschutzfunktion müssen nun zwei Bedingungen erfüllt sein. Zum einen müssen zwei Bremsanforderungssignale unterschiedlichen Ursprungs zeitgleich anliegen und zum anderen müssen diese Bremsanforderungssignale eine hinreichend hohe Verzögerung, in diesem Beispiel eine jeweils maximale Verzögerung, anfordern (maximale Bremsanforderung).

Da die Steuerkomponente 16 das Aktivieren/Deaktivieren der Gleitschutzkontrolleinheit 14 für jedwede Art der Bremsanforderung steuert, prüft sie diese beiden Bedingungen einzeln ab. Die weitere Komponente 18 dient hingegen ausschließlich dem Deaktivieren der Gleitschutzkontrolleinheit 14 und wirkt im Zusammenhang mit dem Gleitschutz daher einfach als logisches Und-Glied.

Beide Komponenten 16, 18 geben über die entsprechenden Steuerpfade C, D ein jeweiliges Steuersignal zur Deaktivierung der Gleitschutzfunktion bei der Gleitschutzkontrolleinheit 14 aus.

Um eine mögliche Störung auf den ersten oder den zweiten Signalpfaden A, B detektieren zu können, wird das Steuersignal der Steuerkomponente 16 gegenüber dem Steuersignal der weiteren Komponente 18 zeitverzögert ausgegeben. Die Zeitverzögerung kann beispielsweise rund eine Sekunde (∼1s) betragen. Die Gleitschutzkontrolleinheit 14 gibt nach Deaktivierung der Gleitschutzfunktion eine Rückmeldung über den Meldepfad E an die Steuerkomponente 16 aus, dass die Gleitschutzfunktion nun deaktiviert ist. Diese kann daraus eine mögliche Störung wie Folgt detektieren:
(i) Erhält die Steuerkomponente 16 eine Meldung auf dem Pfad E und entsprechende Signale auf den ersten Signalpfaden A noch bevor sie selbst ein Steuersignal über den Steuerpfad C an die Gleitschutzkontrolleinheit 14 ausgegeben hat, so liegen die beiden Bremsanforderungssignale unterschiedlichen Ursprungs 20, 22 mit maximaler Bremsanforderung zeitgleich an und die ersten und zweiten Signalpfade A, B sind störungsfrei.
(ii) Erhält die Steuerkomponente 16 eine Meldung auf dem Pfad E ohne entsprechende Signale auf den ersten Signalpfaden A, oder liegen die Signale auf den ersten Signalpfaden A an, ohne dass die Steuerkomponente 16 eine Meldung auf dem Pfad E erhalten hat, so liegt eine Störung vor.

Fig. 2 zeigt eine konkrete Ausführungsform des Bremssystems 10 mit der Steuer- und/oder Regeleinrichtung 12 im Zusammenhang mit den typischen Fahrzeugkomponenten eines Schienenfahrzeugs. Das Bremssystem 10 ist ein pneumatisches Bremssystem und die Fahrzeugkomponenten sind: eine Fahrzeugsteuereinheit (VCU: Vehicle Control Unit) 30, eine Bremssteuereinheit (BCU: Brake Control Unit) 32, Bremsgriffe der Zugbremse (ABH: Automatic Brake Handle) 34, eine Gleitschutzkontrolleinheit (WSP: Wheel Slide Protection) 14 und Bremskomponenten (wie zum Beispiel Bremsleitungen) 36 des Bremssystems 10. Dabei bilden die Fahrzeugsteuereinheit 30, die Bremssteuereinheit 32, und die Gleitschutzkontrolleinheit 14 Komponenten der Steuer- und/oder Regeleinrichtung 12.

Es ergibt sich folgende Funktion:
Wird ein Bremsgriff 34 des ersten Bremsanforderungs-Teilsystems 26 in die Notbremsstellung verbracht und zeitgleich das zweite Bremsanforderungs-Teilsystem 28 maximal betätigt, so wird die Gleitschutzfunktion der Gleitschutzkontrolleinheit 14 deaktiviert und es kommt zu einem gleitschutzfreien Bremsen.

Die gleichzeitige maximale Bremsanforderung beider Bremsanforderungs-Teilsysteme 26, 28 ist bei einer Fahrzeuggeschwindigkeit größer 0 km/h eine Ausnahmesituation, die nur bei einem Ausfall mindestens eines Bremsanforderungs-Teilsystems 26, 28 auftritt und das folgende Handeln provoziert:
(a) Wird erkannt, dass trotz der Bremsanforderung durch Verbringen des Bremsgriffs 34 in die Notbremsstellung (erstes Bremsanforderungs-Teilsystem 26) kein hinreichender Bremsdruck im Bremssystem 10 aufgebaut wird, so wird anschließend höchstwahrscheinlich ein Betätigungselement des zweiten Bremsanforderungs-Teilsystems 28 maximal betätigt.
(b) Wird andererseits erkannt, dass trotz der maximalen Bremsanforderung durch das zweite Bremsanforderungs-Teilsystem 28 kein hinreichender Bremsdruck im Bremssystem 10 aufgebaut wird, so wird anschließend höchstwahrscheinlich ein Bremsgriff 34 der zentralen Zugsteuerung (erstes Bremsanforderungs-Teilsystem 26) in die Notbremsstellung verbracht.

In beiden Fällen liegen dann also zeitgleich zwei Bremsanforderungssignale unterschiedlichen Ursprungs 20, 22 mit jeweils maximaler Bremsanforderung an der Steuer- und/oder Regeleinrichtung 12 an.

Die Notbremsstellung des Bremsgriffs 34 wird durch die Bremssteuereinheit 32 detektiert und über die Signalleitung 38 an die mittels Feldbus (MVB-Bus) 40 mit der Gleitschutzkontrolleinheit 14 korrespondierende Fahrzeugsteuereinheit 30 übermittelt. Gleichzeitig wird ein entsprechendes Zustandssignal mittels eines Schützes 41 auf eine Signalleitung 42 gegeben, die sowohl mit der Fahrzeugsteuereinheit 30 als auch mit der Gleitschutzkontrolleinheit 14 verbindbar ist. Die Bremsgriffe 34 sind also der Ursprung 20 des ersten Bremsanforderungssignals.

Die maximale Betätigung der unabhängigen Bremse wird mittels eines Druckwächters beziehungsweise Druckschalters 44 an einer Druckleitung 36 detektiert. Die Schalterstellung des Druckwächters oder -schalters 44 steuert über ansteuerbare Schalter 46 den Signalfluss in den Signalleitungen 42 von der Bremssteuereinheit 32 zu der Gleitschutzkontrolleinheit 14 und der Fahrzeugsteuereinheit 30. Der Druckwächter oder - schalter 44 ist somit der Ursprung 22 des zweiten Bremsanforderungssignals. Die ansteuerbaren Schalter 46 bilden (unter anderem) die Komponente 18.

Ist also die als maximale Bremsanforderung aufzufassende Notbremsstellung des Bremsgriffs 34 detektiert, das entsprechende Bremsanforderungssignal auf die Signalleitung 42 gegeben und wird die Signalleitung 42 durch das Bremsanforderungssignal der unabhängigen Bremse über die Schalter 46 freigegeben, so erhält die Gleitschutzkontrolleinheit 14 als auch die Fahrzeugsteuereinheit 30 ein entsprechendes Signal. Die Gleitschutzkontrolleinheit 14 schaltet aufgrund des direkten Signals auf der Signalleitung 42 (entspricht Pfad D) wie auch aufgrund eines von diesem Signal stimulierten Signals auf dem Feldbus 40 (entspricht Pfad C) daraufhin die Gleitschutzfunktion ab und es kommt zu einem gleitschutzfreien Bremsen des Schienenfahrzeugs. Die Fahrzeugsteuereinheit 30 überwacht die korrekte Übermittlung und signaltechnische Verarbeitung der Bremsanforderungssignale durch Erhalt von Rückmeldungen der Gleitschutzkontrolleinheit 14 über den Feldbus 40 und generiert im Fehlerfall eine Diagnosemeldung.

## Patentansprüche

1. Verfahren zum Bremsen eines Schienenfahrzeugs mittels eines eine Steuer- und/oder Regeleinrichtung (12) aufweisenden Bremssystems (10), wobei die Steuer- und/oder Regeleinrichtung (12) eine Gleitschutzkontrolleinheit (14) zur Gewährleistung eines vorgegebenen Haftwertes zwischen den Rädern des Schienenfahrzeugs und der Schiene aufweist und wobei Bremsanforderungssignale unterschiedlichen Ursprungs (20, 22) von der Steuer- und/oder Regeleinrichtung (12) berücksichtigt werden,
**dadurch gekennzeichnet, dass** die Gleitschutzfunktion der Gleitschutzkontrolleinheit (14) ausschließlich bei zeitgleichem Anliegen von mindestens zwei Bremsanforderungssignalen unterschiedlichen Ursprungs (20, 22), deren Bremsanforderung über eine jeweilige vorgegebene Verzögerungsgrenze hinausgeht, zum gleitschutzfreien Bremsen deaktiviert wird.

2. Verfahren nach Anspruch 1,
**dadurch gekennzeichnet, dass**
die Gleitschutzkontrolleinheit (14) bei zeitgleichem Anliegen der mindestens zwei Bremsanforderungssignale unterschiedlichen Ursprungs (20, 22) mit jeweils maximaler Bremsanforderung deaktiviert wird.

3. Verfahren nach einem der Ansprüche 1 oder 2,
**dadurch gekennzeichnet, dass**
das Bremssystem (10) mehrere Bremsanforderungs-Teilsysteme (26, 28) aufweist, wobei zumindest zwei der gleichzeitig anliegenden Bremsanforderungssignale ihren Ursprung in unterschiedlichen Bremsanforderungs-Teilsystemen (26, 28) des Bremssystems (10) haben.

4. Verfahren nach einem der Ansprüche 1 bis 3,
**dadurch gekennzeichnet, dass**
die mindestens zwei Bremsanforderungssignale jeweils über zwei voneinander unabhängige Signalpfade (A, B) zu der Steuer- und/oder Regeleinrichtung (12) übertragen werden.

5. Verfahren nach Anspruch 4,
**dadurch gekennzeichnet, dass**
die über die unterschiedlichen Signalpfade (A, B) übertragenen Bremsanforderungssignale unabhängig voneinander zum Deaktivieren der Gleitschutzfunktion der Gleitschutzkontrolleinheit (14) genutzt werden.

6. Verfahren nach Anspruch 4 oder 5,
**dadurch gekennzeichnet, dass**
die über die unterschiedlichen Signalpfade (A, B) übertragenen Bremsanforderungssignale zur Prüfung auf Störungen im Bremssystem (10) genutzt werden.

7. Steuer- und/oder Regeleinrichtung (12) für ein Bremssystem (10) eines Schienenfahrzeugs, mit
- einer Gleitschutzkontrolleinheit (14) zur Gewährleistung eines vorgegebenen Haftwertes zwischen den Rädern des Schienenfahrzeugs und der Schiene und
- Signaleingängen (24) für mehrere Bremsanforderungssignale unterschiedlichen Ursprungs (20, 22),
**dadurch gekennzeichnet, dass**
die Gleitschutzfunktion der Gleitschutzkontrolleinheit (14) deaktivierbar ist, wobei die Steuer- und/oder Regeleinrichtung (12) derart eingerichtet ist, dass die Gleitschutzfunktion der Gleitschutzkontrolleinheit (14) ausschließlich bei zeitgleichem Anliegen von mindestens zwei Bremsanforderungssignalen unterschiedlichen Ursprungs (20, 22) an den Signaleingängen (24), deren Bremsanforderung über eine jeweilige vorgegebene Verzögerungsgrenze hinausgeht, deaktiviert wird.

8. Einrichtung nach Anspruch 7,
**dadurch gekennzeichnet, dass**
die Gleitschutzkontrolleinheit (14) als Gleitschutzkontrolleinheit (14) zur Ansteuerung von an die Steuer- und/oder Regeleinrichtung (12) angeschlossenen Gleitschutzventilen des Bremssystems (10) ausgebildet ist, wobei die Gleitschutzventile auf ihnen nachgeschaltete Bremszylinder des Bremssystems wirken.

9. Bremssystem (10) zum Bremsen eines Schienenfahrzeugs, mit einer Steuer- und/oder Regeleinrichtung (12) nach einem der Ansprüche 7 oder 8.

10. Bremssystem (10) nach Anspruch 9,
**gekennzeichnet durch**
mehrere Bremsanforderungs-Teilsysteme, wobei zumindest zwei der gleichzeitig anliegenden Bremsanforderungssignale ihren Ursprung (20, 22) in unterschiedlichen Bremsanforderungs-Teilsystemen des Bremssystems (10) haben.

## Claims

1. Method for braking a rail vehicle by means of a brake system (10) having an open- and/or closed-loop control device (12), wherein the open- and/or closed-loop control device (12) has a wheel slide protection control unit (14) for ensuring a predefined coefficient of adhesion between the wheels of the rail vehicle and the rail, and wherein brake demand signals of different origin (20, 22) are taken into account by the open-and/or closed-loop control device (12),
**characterised in that**, to provide braking without wheel slide protection, the wheel slide protection function of the wheel slide protection control unit (14) is only deactivated if at least two brake demand signals of different origin (20, 22) are simultaneously present, the brake demand of which exceeds a predefined deceleration limit.

2. Method according to claim 1,
**characterised in that**
the wheel slide protection control unit (14) is deactivated if at least two brake demand signals of different origin (20, 22), each with maximum brake demand, are simultaneously present.

3. Method according to one of claims 1 or 2,
**characterised in that**
the brake system (10) has a plurality of brake demand subsystems (26, 28), wherein at least two of the simultaneously present brake demand signals have their origin in different brake demand subsystems (26, 28) of the brake system (10).

4. Method according to one of claims 1 to 3,
**characterised in that**
the at least two brake demand signals are transmitted via two mutually independent signal paths (A, B) to the open- and/or closed-loop control device (12).

5. Method according to claim 4,
**characterised in that**
the brake demand signals transmitted via the different signal paths (A, B) are used independently of one another to deactivate the wheel slide protection function of the wheel slide protection control unit (14).

6. Method according to claim 4 or 5,
**characterised in that**
the brake demand signals transmitted via the different signal paths (A, B) are used to check for faults in the brake system (10) .

7. Open- and/or closed-loop control device (12) for a brake system (10) of a rail vehicle, comprising
- a wheel slide protection control unit (14) for ensuring a predefined coefficient of adhesion between the wheels of the rail vehicle and the rail, and
- signal inputs (24) for a plurality of brake demand signals of different origin (20, 22),
**characterised in that**
the wheel slide protection function of the wheel slide protection control unit (14) can be deactivated, wherein the open- and/or closed-loop control device (12) is designed such that the wheel slide protection function of the wheel slide protection control unit (14) is only deactivated if at least two brake demand signals of different origin (20, 22), the brake demand of which exceeds a respective predefined deceleration limit, are simultaneously present at the signal inputs (24).

8. Device according to claim 7,
**characterised in that**
the wheel slide protection control unit (14) is implemented as a wheel slide protection control unit (14) for controlling wheel slide protection valves of the brake system (10) that are connected to the open- and/or closed-loop control device (12), wherein the wheel slide protection valves act on downstream brake cylinders of the brake system.

9. Brake system (10) for braking a rail vehicle, comprising an open- and/or closed-loop control device (12) according to one of claims 7 or 8.

10. Brake system (10) according to claim 9,
**characterised by**
a plurality of brake demand subsystems, wherein at least two of the simultaneously present brake demand signals have their origin (20, 22) in different brake demand subsystems of the brake system (10).

## Revendications

1. Procédé pour freiner un véhicule ferroviaire, au moyen d'un système (10) de freinage ayant un dispositif (12) de commande et/ou de régulation, le dispositif (12) de commande et/ou de régulation ayant une unité (14) de contrôle de l'anti-enrayage pour assurer une adhérence donnée à l'avance entre les roues du véhicule ferroviaire et le rail et dans lequel des signaux de demande de freinage, d'origine (20, 22) différente, sont pris en compte par le dispositif (12) de commande et/ou de régulation,
**caractérisé en ce que**
la fonction d'anti-enrayage de l'unité (14) de contrôle de l'anti-enrayage est, pour le freinage sans anti-enrayage, désactivée exclusivement s'il s'applique en même temps au moins deux signaux de demande de freinage d'origine (20, 22) différente, dont la demande de freinage va au-delà d'une limite de décélération respective donnée à l'avance.

2. Procédé suivant la revendication 1,
**caractérisé en ce que**
l'unité (14) de contrôle de l'anti-enrayage est désactivée lors de l'application en même temps des au moins deux signaux de demande de freinage d'origine (20, 22) différente, ayant chacun une demande de freinage maximum.

3. Procédé suivant l'une des revendications 1 ou 2,
**caractérisé en ce que**
le système (10) de frein a plusieurs sous-systèmes (26, 28) de demande de freinage, au moins deux des signaux de demande de freinage s'appliquant en même temps ayant leur origine dans des sous-systèmes (26, 28) de demande de freinage différents du système (10) de frein.

4. Procédé suivant l'une des revendications 1 à 3,
**caractérisé en ce que**
les au moins deux signaux de demande de freinage sont transmis au dispositif (12) de commande et/ou de régulation, respectivement par deux trajets (A, B) de signal indépendants l'un de l'autre.

5. Procédé suivant la revendication 4,
**caractérisé en ce que**
les signaux de demande de freinage transmis par les trajets (A, B) de signal différents sont utilisés indépendamment l'un de l'autre pour désactiver la fonction d'anti-enrayage de l'unité (14) de contrôle de l'anti-enrayage.

6. Procédé suivant la revendication 4 ou 5,
**caractérisé en ce que**
les signaux de demande de freinage transmis par les trajets (A, B) de signal différents sont utilisés pour le contrôle de perturbations du système (10) de frein.

7. Dispositif (12) de commande et/ou de régulation d'un système (10) de frein d'un véhicule ferroviaire, comprenant
- une unité (14) de contrôle d'anti-enrayage pour assurer une adhérence donnée à l'avance entre les roues du véhicule ferroviaire et le rail et
- des entrées (14) de signal pour plusieurs signaux de demande de freinage d'origine (20, 22) différente, **caractérisé en ce que**
la fonction d'anti-enrayage de l'unité (14) de contrôle d'anti-enrayage peut être désactivée, le dispositif (12) de commande et/ou de régulation étant conçu de manière à désactiver la fonction d'anti-enrayage de l'unité (14) de contrôle de l'anti-enrayage s'il s'applique en même temps au moins deux signaux de demande de freinage d'origine (20, 22) différente aux entrées (24) de signal, dont la demande de freinage va au-delà d'une limite de décélération respective donnée à l'avance.

8. Dispositif suivant la revendication 7,
**caractérisé en ce que**
l'unité (14) de contrôle de l'anti-enrayage est constituée sous la forme d'une unité (14) de contrôle de l'anti-enrayage pour la commande de soupapes d'anti-enrayage, raccordée au dispositif (12) de commande et/ou de régulation, du système (10) de frein, les soupapes d'anti-enrayage agissant sur des cylindres de frein du système de frein, qui sont montés en aval de celles-ci.

9. Système (10) de frein pour freiner un véhicule ferroviaire, comprenant un dispositif (12) de commande et/ou de régulation suivant l'une des revendications 7 ou 8.

10. Système (10) de frein suivant la revendication 9,
**caractérisé par** plusieurs sous-systèmes de demande de freinage, dans lequel au moins deux signaux de demande de freinage, s'appliquant en même temps, ont leur origine (20, 22) dans des sous-systèmes de demande de freinage différents du système (10) de frein.
